# EUROPEAN PATENT SPECIFICATION

(11) **EP 2 045 627 B1**
(45) Date of publication and mention of the grant of the patent: **03.12.2014**
(21) Application number: 08105457.9
(22) Date of filing: 29.09.2008
(51) Int. Cl.: G08B 13/183, G01S 17/02, G01S 17/08

(54) **Security system using laser range finder and method of detecting intruder using laser range finder**
Sicherheitssystem mit einem Laserbereichfinder und Verfahren zur Erkennung eines Eindringlings mithilfe des Laserbereichsfinders
Système de sécurité utilisant un télémètre à laser et procédé de détection d'intrusion utilisant un télémètre à laser

(30) Priority: 04.10.2007 WO PCT/KR2007/099623
(43) Date of publication of application: 08.04.2009
(73) Proprietor: Gwangju Institute of Science and Technology, Gwangju 500-712 (KR)
(72) Inventor: Jang, Jae-Hyung c/o Dpt of Inform. and Comm., 500-712, Buk-gu, Gwangju (KR); Lim, Hyuk c/o Dpt of Inform. and Comm., 500-712, Buk-gu, Gwangju (KR)
(74) Representative: Capasso, Olga

(56) References cited:
- GB-A- 2 278 916
- US-B1- 6 188 319

## Description

### BACKGROUND OF THE INVENTION

### 1. Technical Field

The present invention relates to a security system, and more particularly to, a security system using a laser range finder for precisely determining an existence and a location of an intruder and a method of detecting the intruder using the laser range finder.

### 2. Related Art

In general, the development of an electronic communication technology has recently resulted in an increase in a place where an unattended security system is installed. The unattended security system is mainly installed indoors, emits ultrasonic wave or infrared rays to a predetermined space, when an abnormality in the amount of reflective ultrasonic wave or infrared rays is detected, determines that an intruder has broken in, sets off an alarm, and notifies a security company or a predetermined place of such intrusion over a communication network.

However, the unattended security system that emits ultrasonic wave or infrared rays cannot determine a location of the intruder but can only determine an existence of the intruder. As a result, not only can the unattended security system not efficiently monitor the intruder using a monitoring system such as a closed circuit television (CCTV), but the installation cost is increased, and is limited to indoors.

US patent No. 6,188,319 discloses a security system using a laser range finder, the security system comprising the laser range finder emitting a laser beam, receiving the reflected laser beam, measuring a distance between the laser range finder and a target object and detecting an existence and a location of an intruder.

Korean Patent No. 2006-11676 discloses a burglar proof system that uses a laser beam to monitor an intruder in a relatively wide monitoring area such as a ginseng field, a rice field, a field, or an outdoor grain storage, and notifies a manager of the intrusion status when an intruder breaks in, and sets off an alarm means in order to alert the intrusion of an intruder.

### SUMMARY OF THE INVENTION

In Korean Patent No. 2006-11676, the burglar proof system determines an existence of an intruder according to whether laser beam emitted by a laser emitter is received or not; however, the burglar proof system cannot determine a location of the intruder but can only determine the existence of the intruder, when using the conventional security system that emits ultrasonic wave or infrared rays. Further, because the burglar proof system can only determine the existence of the intruder but cannot determine the location of the intruder, the burglar proof system cannot perform a monitoring function that is synchronized with a monitoring system including a monitoring camera such as a closed circuit television (CCTV), which deteriorates the monitoring function.

Accordingly, it is an object of the invention to provide a security system using a laser range finder that can precisely determine an existence and a location of an intruder.

It is another object of the invention to provide a method of detecting an intruder using a laser range finder that can precisely determine an existence and a location of the intruder.

According to an aspect of the present invention, there is provided a security system using a laser range finder, the security system comprising: the laser range finder emitting laser beam, receiving the reflected laser beam, measuring a distance between the laser range finder and a target object, and detecting an existence and a location of an intruder; and at least two reflective means reflecting the emitted laser beam toward the laser beam finder, wherein at least two reflective means are spaced by a predetermined error distance of the laser range finder from an original installation location in view of the error distance of the laser range finder. The laser range finder comprises: a laser beam outputting unit emitting the laser beam toward at least two reflective means; a laser beam receiving unit receiving the laser beam reflected by at least two reflective means and converting the received laser beam into an electrical signal; and a controller measuring the distance between the laser range finder and the target object based on the electrical signal provided by the laser beam receiving unit, comparing the measured distance with a previously established distance, if the measured distance is different from the previously established distance, determining that the intruder exists, and measuring the location of the intruder based on the measured distance. The controller may generate intrusion information and an alarm control signal when the controller determines that the intruder exists. The security system may further comprise: a communication means comprising at least one of wired and wireless network interfaces, and transmitting the intrusion information under the control of the controller; and an alarm means performing at least one of an alarm sound output operation and an emergency light operation under the control of the controller. The security system may further comprise: a monitoring camera photographing an image of the intruder; and a camera controller controlling the monitoring camera based on the location of the intruder provided by the controller, photographing the image of the intruder, and providing the controller with the photographed image of the intruder. The camera controller may control at least one of up/down/left/right angles, an image angle, and a magnification of the monitoring camera based on the location of the intruder provided by the controller. At least two reflective means may be installed in the form of a grid in locations that face each other, and reflect the laser beam emitted by the laser range finder toward the reflective means installed in locations that face each other. At least two reflective means may be installed in the form of at least one row having different heights, and at least one row comprise at least two reflective means that are installed to have the same height.

According to another aspect of the present invention, there is provided a method of detecting an intruder using a laser range finder, the method comprising: emitting a laser beam from the laser beam finder; reflecting the laser beam emitted by the laser range finder toward the laser range finder through at least two reflective means that are spaced by a predetermined error distance of the laser range finder from an original installation location in view of the error distance of the laser beam finder; and detecting an existence and a location of an intruder by receiving the laser beam reflected by at least two reflective means, measuring a distance between the laser range finder and a target object. The receiving of the laser beam reflected by at least two reflective means may comprise: generating intrusion information and an alarm control signal when it is determined that the intruder exists. The receiving of the laser beam reflected by at least two reflective means may comprise: transmitting intrusion information through at least one of wired and wireless network interfaces when it is determined that the intruder exists. The method may further comprise: when it is determined that the intruder exists, controlling a monitoring camera based on the location of the intruder; and photographing an image of the intruder by using the monitoring camera.

### BRIEF DESCRIPTION OF THE DRAWINGS

FIG. 1 is a block diagram of a security system using a laser range finder according to an embodiment of the present invention;
FIG. 2 is a block diagram of a security system using a laser range finder according to another embodiment of the present invention;
FIG. 3 is a view of an installation location of a reflective means shown in FIGS. 1 and 2 according to an embodiment of the present invention;
FIG. 4 is a view of an installation location of a reflective means shown in FIGS. 1 and 2 according to another embodiment of the present invention; and
FIG. 5 is a view of an installation location of a reflective means shown in FIGS. 1 and 2 according to another embodiment of the present invention.

### DESCRIPTION OF EXEMPLARY EMBODIMENT

In the following detailed description, only certain exemplary embodiments of the present invention have been shown and described, simply by way of illustration. As those skilled in the art would realize, the described embodiments may be modified in various different ways, all without departing from the scope of the present invention. This invention may, however, be embodied in many different forms and should not be construed as being limited to the embodiments set forth herein; rather, these embodiments are provided so that this disclosure will be thorough and complete, and will fully convey the concept of the invention to those of ordinary skill in the art. Like reference numerals in the drawings denote like elements.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention. The term "and/or" includes any and all combinations of one or more of the associated listed items.

When it is described that an element is "coupled" or "connected" to another element, the element may be directly coupled or directly connected to the other element or may be a third element therebetween. On the contrary, when it is described that an element is "directly coupled" or "directly connected" to another element, it means no third element is therebetween.

The terminology used herein is for the purpose of describing particular embodiments only and is not intended to be limited by the exemplified embodiments. As used herein, the singular forms "a," "an" and "the" are intended to include the plural forms as well, unless the context clearly indicates otherwise. It will be further understood that the terms "comprises" and/or "comprising" when used in this specification, specify the presence of stated features, integers, steps, operations, elements, and/or components, but do not preclude the presence or addition of one or more other features, integers, steps, operations, elements, components, and/or groups thereof.

The preferred embodiments of the invention will now be described more fully with reference to the accompanying drawings. Like reference numerals in the drawings denote like elements, and thus their description will be omitted.

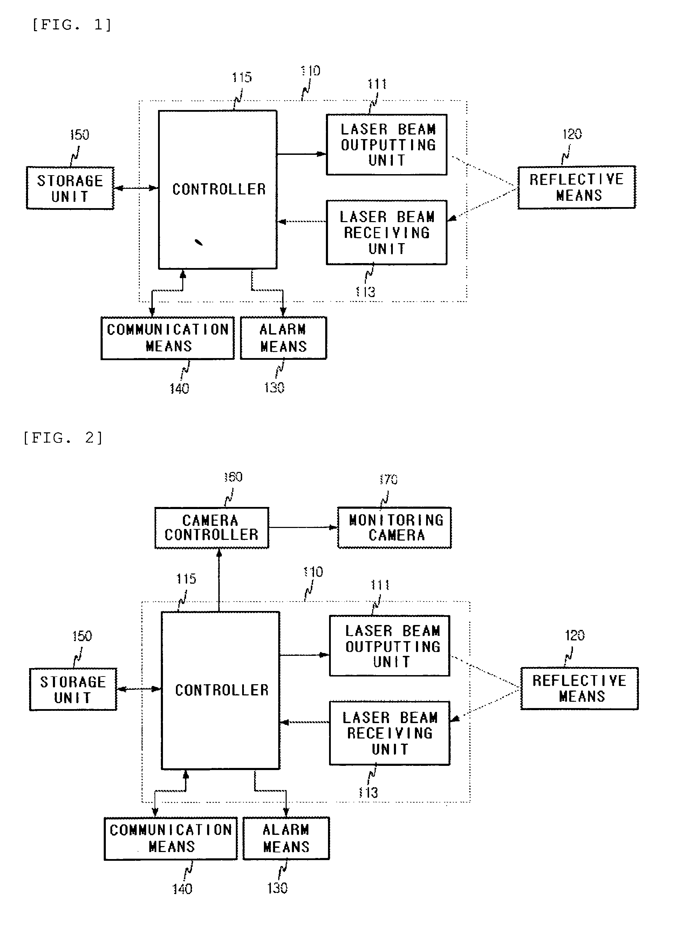

FIG. 1 is a block diagram of a security system using a laser range finder 110 according to an embodiment of the present invention.

Referring to FIG. 1, the security system using the laser range finder 110 comprises the laser range finder 110, a reflective means 120, an alarm means 130, and a storage unit 150.

The laser range finder 110 may be a laser range finder following a pulse detecting method of measuring a distance based on a time of flight of reflecting emitted laser beam on a target object and receiving the reflected laser beam, or a laser beam and range finder following various methods of emitting the laser beam modified by using a predetermined amplitude modulated or frequency modulated signal, comprising a phase or a frequency of a laser beam signal reflected by a target object, and measuring a distance.

Hereinafter, the laser range finder 110 of the present embodiment is a laser range finder using a phase detection method of measuring a distance based on a phase variation of emitted laser beam and received laser beam.

The laser range finder 110 emits a laser beam toward the reflective means 120, receives the laser beam reflected by the reflective means 120, and measures a distance between the laser range finder 110 and the reflective means 120. The laser range finder 110 compares the measured distance with a previously established distance and determines an existence of an intruder.

Although the laser range finder 110 that is well known art is not shown in detail, the laser range finder 110 may comprise a laser beam outputting unit 111, a laser beam receiving unit 113, and a controller 115.

The laser beam outputting unit 111 may comprise an electric circuit, a laser beam transmission laser diode, a laser beam transmission lens, etc. used to generate and modulate a signal, modulates the laser beam under the control of the controller 115, and emits the modulated laser beam toward the reflective means 120.

The laser beam receiving unit 113 may comprise a demodulation circuit, a laser beam receiving diode (for example, avalanche photo diode (APD), and a laser beam receiving lens, receives the laser beam reflected by the reflective means 120, demodulates the received laser beam, and provides the controller 115 with a demodulated electrical signal. The laser beam transmission and receiving lenses may be integrally formed.

The controller 115 controls the laser beam outputting unit 111 , emits the laser beam toward the reflective means 120, and measures a distance between the controller 115 and the target object based on the electrical signal provided by the laser beam receiving unit 113.

Thereafter, the controller 115 determines that the intruder exists when the measured distance is not identical to the predetermined distance, provides the alarm means 130 with an alarm control signal, and stores intrusion information in the storage unit 150. When the controller 115 determines that the intruder exists, the controller 115 provides to a communication means the intrusion information and a communication control signal so that a predetermined institution or a manager can be notified of an intrusion using a predetermined communication method. The previously established distance is a distance between the laser range finder 110 and the reflective means 120. The intrusion information may include distance information between the intruder and the target object, i.e. location information and intrusion time of the intruder.

In more detail, when no intruder exists in a place where a security system is installed, since the laser beam emitted by the laser beam outputting unit 111 is reflected by the reflective means 120 and is received in the laser beam receiving unit 113, this means the measured distance is identical to the predetermined distance. When the intruder exists in the place where the security system is installed, since the laser beam emitted by the laser beam outputting unit 111 is reflected by the intruder and is received in the laser beam receiving unit 113, this means the measured distance is shorter than the predetermined distance. Therefore, the controller 115 compares the measured distance with the predetermined distance, thereby determining the existence of the intruder and measuring a distance between the laser range finder 110 and the intruder, i.e., locating the intruder.

The laser beam outputting unit 111, the laser beam receiving unit 113, and the controller 115 may be spaced apart from each other by a predetermined distance according to an environment of the security system.

The reflective means 120 reflects the laser beam emitted by the laser beam outputting unit 111 toward the laser beam receiving unit 113. The reflective means 120 may use a material having a high beam reflection rate, for example, such as a mirror. Also, the reflective means 120 are spaced by a predetermined error distance of the laser beam finder 110 from an original installation location in view of the error distance of the laser beam finder 110.

For example, when the reflective means 120 are installed 100 m away from the laser range finder 110, and the error distance of the laser beam finder 110 is 10 cm, the reflective means 120 are spaced by more than 10 cm (i.e., more than 100.1 m) from the original installation location in view of the error distance of the laser beam finder 110.

The reflective means 120 may not be separately installed. In more detail, since a general wall can reflect light, the reflective means 120 are not separately installed but the general wall can be used as the reflective means 120. However, material having a high beam reflection rate is used as the reflective means 12, which reduces a measurement error.

The alarm means 130 may comprise a bell, or an emergency light, outputs an alarm sound or operates the emergency light based on the alarm control signal provided by the controller 115.

The communication means 140 may comprise a wireless and/or wired network interface, receives the intrusion information from the controller 115, and transmits the intrusion information to the predetermined institution or the manager according to a predetermined communication protocol.

For example, the communication means 140 may transmit the intrusion information by means of a text message to a cellular phone having a predetermined number over a mobile communication network, or to a security company over a wireless, wired or a wireless/wired communication network in response to the communication control signal provided by the controller 115.

When the controller 115 determines that the intruder exists, the storage unit 150 stores the intrusion information provided by the controller 115. Also, the storage unit 150 may store a predetermined distance value, i.e., a distance value between the laser range finder 110 and the reflective means 120.

FIG. 2 is a block diagram of a security system using a laser range finder 110 according to another embodiment of the present invention. In the present embodiment, the security system using the laser range finder 110 is synchronized with a closed circuit television (CCTV).

Referring to FIG. 2, the security system using the laser range finder 110 may comprise the laser range finder 110, a reflective means 120, an alarm means 130, a communication means 140, a storage unit 150, a camera controller 160, and a monitoring camera 170. The laser range finder 110 may comprise a laser beam outputting unit 111, a laser beam receiving unit 113, and a controller 115.

The laser beam outputting unit 111, the laser beam receiving unit 113, the reflective means 120, the alarm means 130, and the communication means 140 have the same functions as described with reference to FIG. 1 and thus their descriptions are not repeated.

The controller 115 measures a distance between the laser range finder 110 and a target object based on an electrical signal provided by the laser beam receiving unit 113, compares the measured distance with a predetermined distance, and determines the existence of an intruder.

If the controller 115 determines that the intruder exists, the controller 115 provides the camera controller 160 with the measured distance, i.e., location information of the intruder.

The controller 115 may control the storage unit 150 to store an image of the intruder provided by the camera controller 160, and transmit the image of the intruder to a predetermined institution or a manager through the communication means 140.

The camera controller 160 controls the monitoring camera 170 based on the location information of the intruder provided by the controller 115 to photograph the image of the intruder and provide the controller 115 with the photographed image of the intruder.

For example, the camera controller 160 receives the location information of the intruder, i.e., a distance between the laser range finder 110 and the intruder, from the controller 115, and controls a photographing direction such as left and right and/or upper and lower angles of the monitoring camera 170 based on the location information of the intruder. The camera controller 160 calculates a distance between the monitoring camera 160 and the intruder based on the location information of the intruder provided by the controller 115, and zooms in or out the monitoring camera 170 based on the calculated distance, and adjusts a magnification and an image angle of the monitoring camera 160, thereby obtaining a clearer image of the intruder.

Thereafter, the camera controller 160 receives the photographed image of the intruder from the monitoring camera 170, encodes the received image of the intruder according to a previously established compression format, and provides the controller 115 with the encoded image of the intruder.

The monitoring camera 170 can be installed in a predetermined area of a place where the security system is installed, photographs the image of the intruder under the control of the camera controller 160, and provides the camera controller 160 with the photographed image of the intruder.

The monitoring camera 160 may move up and down and/or left and right in response to the control of the camera controller 160, and be designed to adjust an image angle.

As shown in FIG. 2, the security system using the laser range finder 110 of the present embodiment can determine the existence and location of the intruder, thereby monitoring the existence of the intruder by using a monitoring system such as the CCTV, and when an intrusion occurs, precisely photographing the existence and the image of the intruder, making it possible to positively handle the intrusion accordingly.

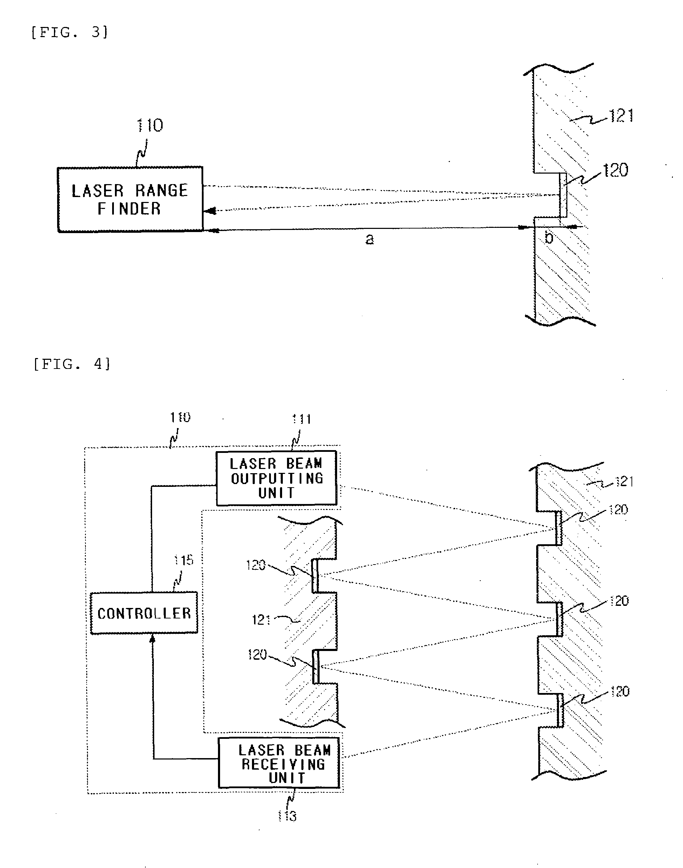

FIG. 3 is a view of an installation location of the reflective means 120 shown in FIGS. 1 and 2 according to an embodiment of the present invention. In the present embodiment, the reflective means 120 are spaced by a predetermined distance from the laser range finder 110 and is installed on a predetermined wall surface 121. For descriptive convenience, FIG. 3 shows only the laser range finder 110 and the reflective mean 120 of the security system using the laser range finder 110 shown in FIGS. 1 and 2.

Referring to FIG. 3, the reflective means 120 are spaced by an error distance b of the laser range finder 110 from the wall surface 121 that is the original installation location.

The laser range finder 110 may produce a measurement error due to a phase difference caused by the physical characteristics of a laser beam receiving diode (for example, MSM, PIN-PD, or APD), and a circuit factor such as beam noise, noise of a detector, noise of an amplifier, etc. The measurement error increases according to an increase in a distance between the laser range finder 110 and the reflective means 120. For example, if a distance between the laser range finder 110 and the wall surface 121 is 100 m, the measured error, i.e. the error distance may be substantially 10 cm. If the distance between the laser range finder 110 and the wall surface 121 is several kilometers, the error distance may be substantially several meters.

Therefore, in the present embodiment, in view of the error distance b of the laser range finder 110, the reflective means 120 are spaced from the laser range finder 110 by a distance of a+b obtained by summing the distance between the laser range finder 110 and the original installation location (i.e. the wall surface 121) and the error distance b, thereby precisely determining the existence and the location of the intruder when an object having thickness less than the error distance b or the intruder exists.

FIG. 4 is a view of an installation location of the reflective means 120 shown in FIGS. 1 and 2 according to another embodiment of the present invention.

Referring to FIG. 4, at least one reflective means 120 is installed in the form of a grid in locations (for example, the wall surface 121) that face each other, sequentially reflects the laser beam emitted by the laser beam outputting unit 111, and sends the reflected laser beam to the laser beam receiving unit 113, so that the security system can monitor an intruder in an area over a wide range by only using the laser beam receiving unit 113 and the laser beam outputting unit 111.

In more detail, the laser beam emitted by the laser beam outputting unit 111 is reflected by a first reflective means, the reflected laser beam is reflected by a second reflective means facing the first reflective means, and the laser beam reflected by the second reflective means is reflected by a third reflective means facing the second reflective means. Such process is repeated so that the laser beam reflected by at least one of the three reflective means is received in the laser beam receiving unit 113.

At least two reflective means 120 are installed at adjustable intervals, thereby adjusting the monitoring environment according to the size of an intrusion object. For example, at least two reflective means 120 are installed at a short interval, thereby monitoring an intrusion of a small object.

When at least two reflective means 120 are installed in the present embodiment, the laser beam receiving unit 113 and the laser beam outputting unit 111 may be spaced by a predetermined distance in accordance with the installation locations of at least two reflective means 120.

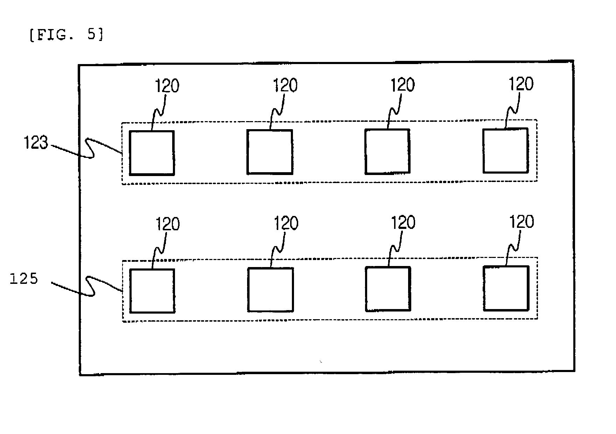

FIG. 5 is a view of an installation location of the reflective means shown in FIGS. 1 and 2 according to another embodiment of the present invention.

Referring to FIG. 5, at least two reflective means 120 may be installed in at least one of the rows 123 and 125 having different heights, and may be installed to have the same height in each of the rows 123 and 125.

When at least two reflective means 120 are installed on one of the rows 123 and 125 having different heights, the numbers of laser beam receiving unit 113 and the laser beam outputting unit 111 may correspond to the number of rows 123 and 125.

For example, when at least two reflective means 120 are installed in one of the two rows 123 and 125, the numbers of laser beam receiving unit 113 and the laser beam outputting unit 111 are each 2. The two laser beam outputting units 113 emit laser beam toward at least two reflective means 120 installed in one of the two rows 123 and 125, respectively. The two laser beam receiving units 113 receive the laser beam reflected by at least two reflective means 120 installed in one of the two rows 123 and 125, respectively, and transfer the received laser beam to the controller 115.

Even though at least two reflective means 120 are installed in at least one of the rows 123 and 125 having different heights, and are installed to have the same height in each of the rows 123 and 125 in the present embodiment, at least two reflective means 120 are can be installed in at least one of the rows having different heights, and one of the installed can have a long shape.

According to the security system using a laser range finder and method of detecting an intruder using the laser range finder, the laser range finder emits a laser beam, receives the laser beam reflected by a target object, measures a distance from the target object, compares the distance with a predetermined distance, and detects an existence and a location of the intruder. A reflective means reflect the laser beam emitted by the laser range finder to allow the laser range finder to receive the laser beam, and is spaced by a predetermined error distance of the laser range finder from an original installation location in view of the error distance.

Therefore, the reflective means are installed in view of the error distance of the laser range finder, thereby precisely determining the existence and the location of the intruder. Also, the location information of the intruder is used to control a monitoring camera, thereby exactly photographing an image of the intruder, and positively dealing with the intruder.

While the present invention has been particularly shown and described with reference to exemplary embodiments thereof, it will be understood by one of ordinary skill in the art that various changes in form and details may be made therein without departing from the scope of the present invention as defined by the following claims.

## Claims

1. A security system using a laser range finder (110), the security system comprising:
the laser range finder (110) emitting a laser beam, receiving the reflected laser beam, measuring a distance between the laser range finder (110) and a target object, and detecting an existence and a location of an intruder; and
at least two reflective means (120) reflecting the emitted laser beam toward the laser beam finder,
wherein at least two reflective means (120) are spaced by a predetermined error distance of the laser range finder (110) from an original installation location (121) in view of the error distance of the laser range finder (110).

2. The security system of claim 1,
wherein the laser range finder comprises:
a laser beam outputting unit (111) emitting the laser beam toward at least one reflective means;
a laser beam receiving unit (113) receiving the laser beam reflected by at least one reflective means and converting the received laser beam into an electrical signal; and
a controller (115) measuring the distance between the laser range finder and the target object based on the electrical signal provided by the laser beam receiving unit, comparing the measured distance with a predetermined distance, if the measured distance is different from the predetermined distance, determining that the intruder exists, and measuring the location of the intruder based on the measured distance.

3. The security system of claim 2,
wherein the controller (115) generates intrusion information and an alarm control signal when the controller determines that the intruder exists.

4. The security system of claim 3, further comprising:
a communication means (140) comprising at least one of wired and wireless network interfaces, and transmitting the intrusion information under the control of the controller; and
an alarm means (130) performing at least one of an alarm sound output operation and an emergency light operation under the control of the controller.

5. The security system of claim 2, further comprising:
a monitoring camera (170) photographing an image of the intruder; and
a camera controller (160) controlling the monitoring camera based on the location of the intruder provided by the controller, photographing the image of the intruder, and providing the controller with the photographed image of the intruder.

6. The security system of claim 5,
wherein the camera controller controls at least one of up/down/left/right angles, an image angle, and a magnification of the monitoring camera based on the location of the intruder provided by the controller.

7. The security system of claim 1,
wherein at least one reflective means is installed in the form of a grid in locations that face each other, and reflect the laser beam emitted by the laser range finder toward the reflective means installed in the locations that face each other.

8. The security system of claim 1,
wherein at least one reflective means is installed in at least one of the rows having different heights, and at least one of the rows comprise at least one reflective means that is installed to have the same height.

9. A method of detecting an intruder using a laser range finder (110), the method comprising the step of emitting a laser beam from the laser beam finder; **characterized by** the steps of
reflecting the laser beam emitted by the laser range finder toward the laser range finder through at least two reflective means (120) that are spaced by a predetermined error distance of the laser range finder (110) from an original installation location (121) in view of the error distance of the laser beam finder (110); and
detecting an existence and a location of an intruder by receiving the laser beam reflected by at least two reflective means and measuring a distance between the laser range finder and a target object.

10. The method of claim 9,
wherein the detecting an existence and a location of an intruder, comprises:
generating intrusion information and an alarm control signal when it is determined that the intruder exists.

11. The method of claim 9,
wherein detecting an existence and a location of an intruder, comprises:
transmitting intrusion information through at least one of wired and wireless network interfaces when it is determined that the intruder exists.

12. The method of claim 9, further comprising:
when it is determined that the intruder exists, controlling a monitoring camera (170) based on the location of the intruder; and
photographing an image of the intruder by using the monitoring camera.

## Patentansprüche

1. Sicherheitssystem unter Verwendung eines Laser-Entfernungsmessers (110), wobei das Sicherheitssystem Folgendes umfasst:
den Laser-Entfernungsmesser (110), der einen Laserstrahl emittiert, den reflektierten Laserstrahl empfängt, einen Abstand zwischen dem Laser-Entfernungsmesser (110) und einem Zielobjekt misst und eine Anwesenheit und eine Position eines Eindringlings ermittelt; und
mindestens zwei reflektierende Mittel (120), die den emittierten Laserstrahl in Richtung auf den Laser-Entfernungsmesser emittieren,
wobei mindestens zwei reflektierende Mittel (120) im Hinblick auf den Abweichungsabstand des Laser-Entfernungsmessers (110) um einen vorbestimmten Abweichungsabstand des Laser-Entfernungsmessers (110) von einer ursprünglichen Installationsposition (121) beabstandet sind.

2. Sicherheitssystem nach Anspruch 1,
wobei der Laser-Entfernungsmesser Folgendes umfasst:
eine Laserstrahl-Ausgabeeinheit (111), die den Laserstrahl in Richtung auf mindestens ein reflektierendes Mittel emittiert;
eine Laserstrahl-Empfangseinheit (113), die den Laserstrahl empfängt, der von mindestens einem reflektierenden Mittel reflektiert wird und den empfangenen Laserstrahl in ein elektrisches Signal umwandelt; und
einen Controller (115), der den Abstand zwischen dem Laser-Entfernungsmesser und dem Zielobjekt basierend auf dem elektrischen Signal misst, das von der Laserstrahl-Empfangseinheit bereitgestellt wird, den gemessenen Abstand mit einem vorbestimmten Abstand vergleicht, falls der gemessene Abstand anders als der vorbestimmte Abstand ist, bestimmt, dass der Eindringling anwesend ist, und die Position des Eindringlings basierend auf dem gemessenen Abstand misst.

3. Sicherheitssystem nach Anspruch 2,
wobei der Controller (115) Eindringinformationen und ein Alarmsteuersignal generiert, wenn der Controller bestimmt, dass der Eindringling anwesend ist.

4. Sicherheitssystem nach Anspruch 3, ferner umfassend:
ein Kommunikationsmittel (140), das mindestens eine von drahtgebundenen und drahtlosen Netzwerkschnittstellen umfasst und die Eindringinformationen unter der Kontrolle des Controllers überträgt; und
ein Alarmmittel (130), das mindestens einen von einem Alarmton-Ausgabevorgang und einem Notlichtvorgang unter der Kontrolle des Controllers ausführt.

5. Sicherheitssystem nach Anspruch 2, ferner umfassend:
eine Überwachungskamera (170), die ein Bild des Eindringlings aufnimmt; und
einen Kamera-Controller (160), der die Überwachungskamera basierend auf der Position des Eindringlings steuert, die von dem Controller bereitgestellt wird, das Bild des Eindringlings aufnimmt und dem Controller das aufgenommene Bild des Eindringlings bereitstellt.

6. Sicherheitssystem nach Anspruch 5,
wobei der Kamera-Controller mindestens eines von Winkeln nach oben/unten/links/rechts, einem Bildwinkel und einer Vergrößerung der Überwachungskamera basierend auf der Position des Eindringlings, die von dem Controller bereitgestellt wird, steuert.

7. Sicherheitssystem nach Anspruch 1,
wobei mindestens ein reflektierendes Mittel in Form eines Gitters an Positionen installiert ist, die einander gegenüberstehen und den Laserstrahl reflektieren, der von dem Laser-Entfernungsmesser in Richtung auf die reflektierenden Mittel emittiert wird, die in den einander gegenüberstehenden Positionen installiert sind.

8. Sicherheitssystem nach Anspruch 1,
wobei mindestens ein reflektierendes Mittel in mindestens einer der Reihen installiert ist, die unterschiedliche Höhen aufweisen, und mindestens eine der Reihen mindestens ein reflektierendes Mittel umfasst, das installiert ist, um die gleiche Höhe aufzuweisen.

9. Verfahren zum Ermitteln eines Eindringlings unter Verwendung eines Laser-Entfernungsmessers (110), wobei das Verfahren den Schritt des Emittieren eines Laserstrahls von dem Laser-Entfernungsmesser umfasst; **gekennzeichnet durch** folgende Schritte:
Reflektieren des Laserstrahls, der von dem Laser-Entfernungsmesser in Richtung auf den Laser-Entfernungsmesser **durch** mindestens zwei reflektierende Mittel (120) emittiert wird, die angesichts des Abweichungsabstands des Laserstrahlmessers (110) um einen vorbestimmten Abweichungsabstand des Laser-Entfernungsmessers (110) von einer ursprünglichen Installationsposition (121) beabstandet sind; und
Ermitteln einer Anwesenheit und einer Position eines Eindringlings **durch** Empfangen des Laserstrahls, der von mindestens zwei reflektierenden Mitteln reflektiert wird, und Messen eines Abstands zwischen dem Laser-Entfernungsmesser und einem Zielobjekt.

10. Verfahren nach Anspruch 9,
wobei das Ermitteln einer Anwesenheit und einer Position eines Eindringlings Folgendes umfasst:
Generieren von Eindringinformationen und eines Alarmsteuersignals, wenn bestimmt wird, das der Eindringling anwesend ist.

11. Verfahren nach Anspruch 9,
wobei das Ermitteln einer Anwesenheit und einer Position eines Eindringlings Folgendes umfasst:
Übertragen von Eindringinformationen über mindestens eine von drahtgebundenen und drahtlosen Netzwerkschnittstellen, wenn bestimmt wird, dass der Eindringling anwesend ist.

12. Verfahren nach Anspruch 9, ferner umfassend folgende Schritte:
wenn bestimmt wird, dass der Eindringling anwesend ist, Steuern einer Überwachungskamera (170) basierend auf der Position des Eindringlings; und
Aufnehmen eines Bildes des Eindringlings unter Verwendung der Überwachungskamera.

## Revendications

1. Système de sécurité utilisant un télémètre à laser (110), le système de sécurité comprenant :
le télémètre à laser (110) émettant un faisceau laser, recevant le faisceau laser réfléchi, mesurant une distance entre le télémètre à laser (110) et un objet cible, et détectant une existence et un emplacement d'un intrus ; et
au moins deux moyens de réflexion (120) réfléchissant le faisceau laser émis vers le télémètre à faisceau laser,
dans lequel au moins deux moyens de réflexion (120) sont espacés d'une distance d'erreur prédéterminée du télémètre à laser (110) par rapport à un emplacement d'installation d'origine (121) compte tenu de la distance d'erreur du télémètre à laser (110).

2. Système de sécurité selon la revendication 1,
dans lequel le télémètre à laser comprend :
une unité de sortie de faisceau laser (111) émettant le faisceau laser vers au moins un moyen de réflexion ;
une unité de réception de faisceau laser (113) recevant le faisceau laser réfléchi par au moins un moyen de réflexion et convertissant le faisceau laser reçu en un signal électrique ; et
un contrôleur (115) mesurant la distance entre le télémètre à laser et l'objet cible sur la base du signal électrique fourni par l'unité de réception de faisceau laser, comparant la distance mesurée à une distance prédéterminée, lorsque la distance mesurée est différente de la distance prédéterminée, déterminant que l'intrus existe, et mesurant l'emplacement de l'intrus sur la base de la distance mesurée.

3. Système de sécurité selon la revendication 2, dans lequel le contrôleur (115) génère une information d'intrusion et un signal de commande d'alarme lorsque le contrôleur détermine que l'intrus existe.

4. Système de sécurité selon la revendication 3, comprenant par ailleurs :
un moyen de communication (140) comprenant au moins l'une parmi une interface réseau filaire et une interface réseau sans fil, et transmettant l'information d'intrusion sous le contrôle du contrôleur ; et
un moyen d'alarme (130) effectuant au moins l'une parmi une opération d'émission de son d'alarme et une opération d'éclairage d'urgence sous le contrôle du contrôleur.

5. Système de sécurité selon la revendication 2, comprenant en outre :
une caméra de surveillance (170) photographiant une image de l'intrus ; et
un contrôleur de caméra (160) contrôlant la caméra de surveillance sur la base de l'emplacement de l'intrus fourni par le contrôleur, photographiant l'image de l'intrus, et fournissant au contrôleur l'image photographiée de l'intrus.

6. Système de sécurité selon la revendication 5,
dans lequel le contrôleur de caméra contrôle au moins l'un parmi un angle du haut/du bas/de droite/de gauche, un angle d'image, et un agrandissement de la caméra de surveillance sur la base de l'emplacement de l'intrus fourni par le contrôleur.

7. Système de sécurité selon la revendication 1, dans lequel au moins un moyen de réflexion est installé sous la forme d'une grille dans des emplacements se faisant face les uns les autres, et réfléchissant le faisceau laser émis par le télémètre à laser vers les moyens de réflexion installés dans les emplacements se faisant face les uns les autres.

8. Système de sécurité selon la revendication 1, dans lequel au moins un moyen de réflexion est installé dans au moins l'une des rangées ayant des hauteurs différentes, et au moins l'une des rangées comprend au moins un moyen de réflexion qui est installé de manière à avoir la même hauteur.

9. Procédé de détection d'un intrus en utilisant un télémètre à laser (110), le procédé comprenant l'étape d'émission d'un faisceau laser à partir du télémètre à laser ; **caractérisé par** les étapes suivantes :
réflexion du faisceau laser émis par le télémètre à laser vers le télémètre à laser grâce à au moins deux moyens de réflexion (120) qui sont espacés d'une distance d'erreur prédéterminée du télémètre à laser (110) par rapport à un emplacement d'installation (121) d'origine compte tenu de la distance d'erreur du télémètre à laser (110) ; et
détection d'une existence et d'un emplacement d'un intrus en recevant le faisceau laser réfléchi par au moins deux moyens de réflexion, et mesure d'une distance entre le télémètre à laser et un objet cible.

10. Procédé selon la revendication 9,
dans lequel la détection d'une existence et d'un emplacement d'un intrus comprend :
génération d'une information d'intrusion et d'un signal de commande d'alarme lorsque l'on détermine que l'intrus existe.

11. Procédé selon la revendication 9,
dans lequel la détection d'une existence et d'un emplacement d'un intrus comprend :
transmission d'une information d'intrusion par l'intermédiaire d'au moins l'une parmi une interface réseau filaire et une interface réseau sans fil lorsque l'on détermine que l'intrus existe.

12. Procédé selon la revendication 9, comprenant en outre :
en cas de détermination que l'intrus existe, le contrôle d'une caméra de surveillance (170) sur la base de l'emplacement de l'intrus ; et
la prise de vue photographique d'une image de l'intrus en utilisant la caméra de surveillance.
